# DEMANDE DE BREVET EUROPEEN

(11) **EP 4 424 553 A1**
(43) Date de publication de la demande: **04.09.2024**
(21) Numéro de dépôt: 24158076.0
(22) Date de dépôt: 16.02.2024
(51) Int. Cl.: B60M 1/02, B60M 1/28, B61L 27/53

(54) **DISPOSITIF ET PROCÉDÉ DE SURVEILLANCE DE LA TEMPÉRATURE D'UN FIL DE CONTACT D'UNE CATÉNAIRE**

(30) Priorité: 01.03.2023 FR 2301925
(71) Demandeur: SNCF Réseau, 93200 Saint-Denis (FR); Moiz, 38042 Grenoble (FR)
(72) Inventeur: DUSSART, Adrien, 93400 Saint-Ouen (FR); TAINOFF, Dimitri, 38700 La Tronche (FR); DESLANDES, Hervé, 38410 Saint Martin D'Uriage (FR); PROUDHOM, Anaïs, 38100 Grenoble (FR); LOPEZ, Nicolas, 38000 Grenoble (FR)
(74) Mandataire: Argyma

(57) **Abrégé**

Un dispositif de surveillance (1) d'un fil de contact (2) de caténaire configuré pour alimenter un véhicule ferroviaire, le dispositif de surveillance (1) comprenant au moins un capteur de température (4) configuré pour réaliser une mesure de température de la surface supérieure (22) du fil de contact (2), au moins un organe de transmission sans fil (6) configuré pour transmettre au moins une mesure de température issue du capteur de température (4) et au moins un générateur d'énergie électrique (7) configuré pour générer de l'énergie électrique par effet Seebeck pour alimenter le capteur de température (4) et l'organe de transmission (6).

## Description

### DOMAINE TECHNIQUE

La présente invention concerne l'alimentation électrique d'un véhicule ferroviaire et, plus particulièrement, la surveillance de la température d'un conducteur électrique comme notamment celle du fil de contact d'une caténaire.

### ETAT DE LA TECHNIQUE

De manière classique, une voie ferrée comporte des rails de circulation longitudinaux qui reposent au sol et sont destinés à être en contact avec les roues d'un véhicule ferroviaire, et une ligne électrique aérienne, suspendue au-dessus des rails de circulation et destinée à être en contact avec un pantographe d'un véhicule ferroviaire pour l'alimenter électriquement. Lors de la circulation du véhicule ferroviaire, le courant capté dans la ligne aérienne alimente le véhicule ferroviaire puis circule dans les rails de circulation. Une telle ligne électrique est connue sous la désignation de caténaire. Par exemple, une caténaire comporte un fil de contact dans lequel circule le courant électrique d'alimentation électrique et un câble porteur, situé au-dessus du fil de contact, auquel est suspendu le fil de contact via des pendules.

Au cours du temps, le fil de contact peut subir des dégradations, par exemple dues aux conditions météorologiques ou à l'usure liée au contact avec l'archet du pantographe. En particulier, le fil de contact étant réalisé à partir d'un matériau conducteur, des hausses excessives de température peuvent entrainer une élongation excessive et une modification des caractéristiques mécaniques du fil de contact sous l'effet de l'échauffement électrique. A contrario, une humidité excessive par temps froid peut entrainer la formation de givre sur le fil de contact. Afin d'éviter une rupture du fil de contact, il est nécessaire de surveiller des portions du fil de contact afin de permettre de réaliser une maintenance préventive et ainsi éviter tout arrêt de l'exploitation.

Il est connu dans l'art antérieur de mesurer localement la température ou l'hygrométrie autour d'un fil de contact en dépêchant un opérateur à différentes portions critiques du fil de contact. Une telle solution ne permet pas de réaliser une surveillance régulière et est onéreuse.

Il a été proposé dans l'art antérieur de monter un dispositif de surveillance de manière permanente sur une structure porteuse de la caténaire afin de pouvoir mesurer à distance la température et l'hygrométrie ambiante au voisinage du fil de contact. Le document KR20210060736A décrit un exemple d'une telle réalisation. Une telle mesure à distance affecte la fiabilité des mesures de température et d'hygrométrie. Alternativement, il est connu de monter un dispositif de surveillance sur un véhicule ferroviaire pour mesurer à distance la température d'un fil de contact. Une telle solution présente les mêmes désavantages qu'évoqués précédemment. Elle présente en outre l'inconvénient de ne pas permettre une surveillance régulière d'une portion critique d'un fil de contact.

Dans le domaine du transport d'énergie électrique depuis une centrale électrique, il est connu de monter un dispositif de surveillance sur un câble d'alimentation. Le dispositif de surveillance s'étend de manière circonférentielle autour d'une portion du câble d'alimentation afin de pouvoir être alimenté par induction via le courant circulant dans le câble d'alimentation. Bien que séduisant, un tel dispositif de surveillance n'est pas adapté pour être monté sur un fil de contact d'une caténaire étant donné qu'il formerait un obstacle lors du passage d'un pantographe d'un véhicule ferroviaire. Les document JP2021030770A et WO2022097178A1 décrivent des exemples de telles réalisations. Dans le domaine ferroviaire, le document WO2012167898A2 décrit en particulier un agencement de capteurs configurés pour détecter des irrégularités sur un fil de contact de caténaire. L'alimentation d'un capteur, notamment un capteur de température par une induction issue d'un courant électrique circulant dans le fil de contact caténaire présente néanmoins l'inconvénient de prélever de l'énergie du fil de contact, ce qui affecte la mesure locale de température dudit fil de contact.

Pour fournir de l'énergie électrique à un capteur de température d'un dispositif de surveillance, notamment une énergie renouvelable faiblement émettrice de gaz à effet de serre, il est connu dans le domaine technique de la surveillance de rails des dispositifs de surveillance comprenant des générateurs d'énergie électrique à effet Seebeck. Les documents Elsevier 0360-5442 du 16 Mai 2019 « Harvesting thermoelectric energy from railway track » et WO2016/164093A1 décrivent des exemples de telles réalisations. Néanmoins, ces dispositifs présentent également un problème de prélèvement d'énergie de l'élément monitoré, ce qui affecte également la mesure locale de température dudit élément.

L'invention vise donc à résoudre tout ou partie des inconvénients de l'état de la technique, en proposant un dispositif de surveillance d'un fil de contact permettant de réaliser des mesures fiables et fréquentes afin de détecter de manière réactive tout dysfonctionnement.

### PRESENTATION DE L'INVENTION

L'invention concerne un dispositif de surveillance d'un fil de contact de caténaire configuré pour alimenter un véhicule ferroviaire, le dispositif de surveillance étant configuré pour être relié au fil de contact de sorte que le dispositif de surveillance est positionné au-dessus du fil de contact, le fil de contact étant longitudinal et comprenant une surface inférieure tournée vers le sol et une surface supérieure tournée opposée à la surface inférieure, le dispositif de surveillance comprenant :
- au moins un capteur de température configuré pour réaliser une mesure de température de la surface supérieure du fil de contact ;
- au moins un organe de transmission sans fil configuré pour transmettre au moins une mesure de température issue du capteur de température ;
- au moins un générateur d'énergie électrique configuré pour générer de l'énergie électrique par effet Seebeck pour alimenter le capteur de température et l'organe de transmission.

Grâce à une telle combinaison de caractéristiques, un tel dispositif de surveillance permet ainsi de surveiller l'évolution de la température d'un fil de contact de manière locale sur une portion donnée du fil de contact de caténaire. En outre, un tel dispositif présente l'avantage d'être positionné de manière permanente, d'une part, car la surface inférieure du fil de contact est laissée libre pour le passage d'un pantographe d'un véhicule ferroviaire et, d'autre part, car le dispositif est autonome en énergie et ne doit pas être rechargé par une action manuelle. La température du fil de contact sur une portion donnée peut ainsi être surveillée en temps réel. L'effet Seebeck est le phénomène physique par lequel une différence de potentiel apparaît à la jonction de deux matériaux soumis à une différence de températures.

Selon un aspect, le dispositif de surveillance comprend au moins un organe de fixation configuré pour serrer latéralement le fil de contact.

Selon un aspect, le dispositif de surveillance comprend au moins deux capteurs de température configurés pour être espacés longitudinalement, de préférence, d'au moins 30 cm.

Selon un aspect, le générateur d'énergie électrique comprend :
- au moins un capot absorbant configuré pour être chauffé par rayonnement solaire ;
- au moins un dissipateur thermique ;
- au moins un module à effet Seebeck configuré pour générer de l'énergie électrique à partir de la différence de température entre le capot absorbant et le dissipateur thermique.

Le générateur d'énergie électrique permet ainsi de tirer avantage de la chaleur générée par le soleil et non uniquement de l'ensoleillement, ce qui est avantageux. Une telle configuration permet de maximiser la production d'énergie électrique.

Selon un aspect, le générateur d'énergie électrique comprend :
- au moins un dissipateur thermique ;
- au moins un module à effet Seebeck configuré pour générer de l'énergie électrique à partir de la différence de température entre la surface supérieure du fil de contact et le dissipateur thermique.

Cela permet avantageusement de permettre un montage dans une zone critique dépourvue d'exposition au soleil, par exemple, un tunnel. Une telle configuration permet en outre de réduire l'encombrement étant donné qu'il n'est pas nécessaire de prévoir un capot.

Selon un aspect, le dispositif de surveillance comprend au moins un accumulateur électrique configuré pour être alimenté en énergie électrique par le générateur d'énergie électrique. Le stockage d'énergie électrique permet l'utilisation d'énergie électrique générée préalablement lorsque les conditions ne permettent pas au générateur d'énergie électrique d'alimenter le dispositif de surveillance.

Selon un aspect, le dispositif de surveillance comprend au moins une sonde météo configurée pour réaliser une mesure de point de rosée au voisinage du fil de contact, la sonde météo étant alimentée en énergie électrique par le générateur d'énergie électrique.

Selon un aspect, le dispositif de surveillance comprend au moins un capteur de mesure de la pression atmosphérique. Selon un aspect, le dispositif de surveillance comprend au moins un capteur de mesure de la température ambiante.

L'invention concerne également un ensemble comprenant un fil de contact de caténaire et au moins un dispositif de surveillance tel que présenté précédemment, le dispositif de surveillance étant positionné au-dessus du fil de contact.

Selon un aspect, le fil de contact comprenant au moins une rainure longitudinale, le dispositif de surveillance comprend au moins un organe de fixation configuré pour coopérer avec la rainure longitudinale.

L'invention concerne également un procédé de surveillance de température d'un fil de contact de caténaire par un dispositif de surveillance tel que présenté précédemment, le dispositif de surveillance étant positionné au-dessus du fil de contact, le procédé comprenant des étapes consistant à :
- Réaliser une mesure de température d'une surface supérieure du fil de contact avec le capteur de température ;
- transmettre au moins une mesure de température issue du capteur de température avec l'organe de transmission sans fil ;
- générer de l'énergie électrique par effet Seebeck pour alimenter le capteur de température et l'organe de transmission avec le générateur d'énergie électrique.

Avantageusement, le procédé de surveillance comprend des étapes consistant à :
- comparer la température mesurée à une température de référence avec l'organe de transmission sans fil ;
- transmettre la température mesurée dans le cas où ladite température mesurée est supérieure à la température de référence avec l'organe de transmission sans fil à un récepteur à distance ;
- itérer les étapes précédentes selon un pas temporel prédéfini.

Dans une telle configuration, le dispositif peut transmettre une information de température à un récepteur à distance uniquement si ladite température représente une anomalie, ce qui permet de réduire sensiblement l'énergie électrique consommée par l'organe de transmission sans fil. De préférence, des mesures sont émises néanmoins de manière périodique pour s'assurer du bon fonctionnement du dispositif de surveillance.

L'invention concerne également un procédé de montage d'un ensemble de surveillance comme décrit ci-dessus, comprenant :
- le montage du dispositif de surveillance sur le fil de contact de sorte que le dispositif de surveillance est positionné au-dessus du fil de contact et que le capteur de température du dispositif de surveillance est en contact avec la surface supérieure du fil ;
- la mise en position des organes de fixation dans les rainures du fil de contact ;
- le maintien en position des mors des organes de fixation par serrage, dans les rainures du fil de contact.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique de côté d'un fil de contact de caténaire équipé d'une pluralités de dispositifs de surveillance selon une forme de réalisation de l'invention ;
La figure 2 est une représentation schématique fonctionnelle d'un dispositif de surveillance selon une forme de réalisation de l'invention ;
La figure 3 est une représentation schématique en perspective de dessous d'un dispositif de surveillance selon une forme de réalisation de l'invention ;
La figure 4 est une représentation schématique de côté du dispositif de surveillance de la figure 3 ;
La figure 5 est une représentation schématique de côté d'un dispositif de surveillance selon un autre forme de réalisation de l'invention ;
La figure 6 est une représentation schématique en perspective du dispositif de surveillance lors de son montage sur le fil de contact ;
La figure 7 est une représentation schématiques des étapes de mise en oeuvre d'un procédé de surveillance selon un mode de mise en oeuvre selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

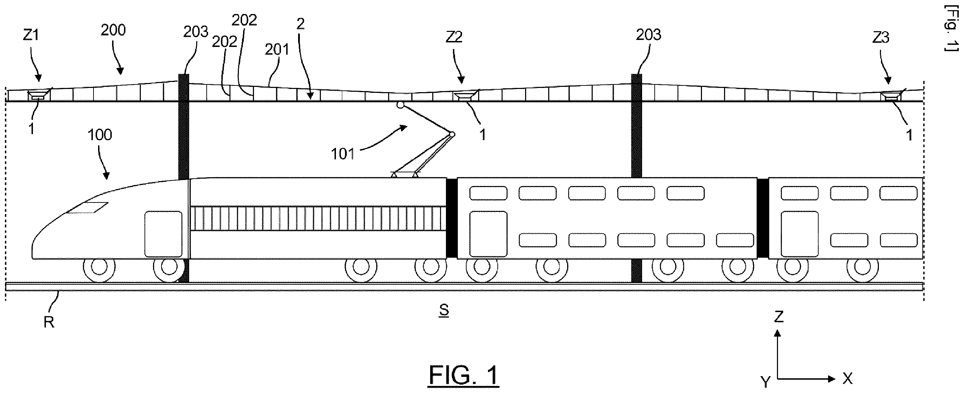

La figure 1 est une représentation schématique d'un véhicule ferroviaire 100 circulant sur une voie ferrée. La voie ferrée comporte des rails de circulation longitudinaux R qui reposent au sol S et qui sont destinés à être en contact avec les roues du véhicule ferroviaire 100. La voie ferrée comporte en outre une ligne électrique aérienne 200, connue de l'homme du métier sous la désignation de caténaire, qui s'étend au-dessus des rails de circulation R pour alimenter le véhicule ferroviaire 100. Dans cet exemple, la ligne électrique aérienne 200 comprend un fil de contact 2, destiné à être en contact avec un pantographe 101 du véhicule ferroviaire 100, qui est relié à un fil porteur 201 par l'intermédiaire de pendules 202. Le fil porteur 201 est relié à une structure porteuse, par exemple, une pluralité de supports caténaire 203.

Comme illustré à la figure 1, le fil de contact 2 s'étend longitudinalement selon un axe X orienté de l'amont vers l'aval. Par la suite, on définit un repère orthogonal (X, Y, Z) dans lequel l'axe X s'étend longitudinalement, l'axe Y s'étend latéralement et l'axe Z s'étend verticalement du bas vers le haut.

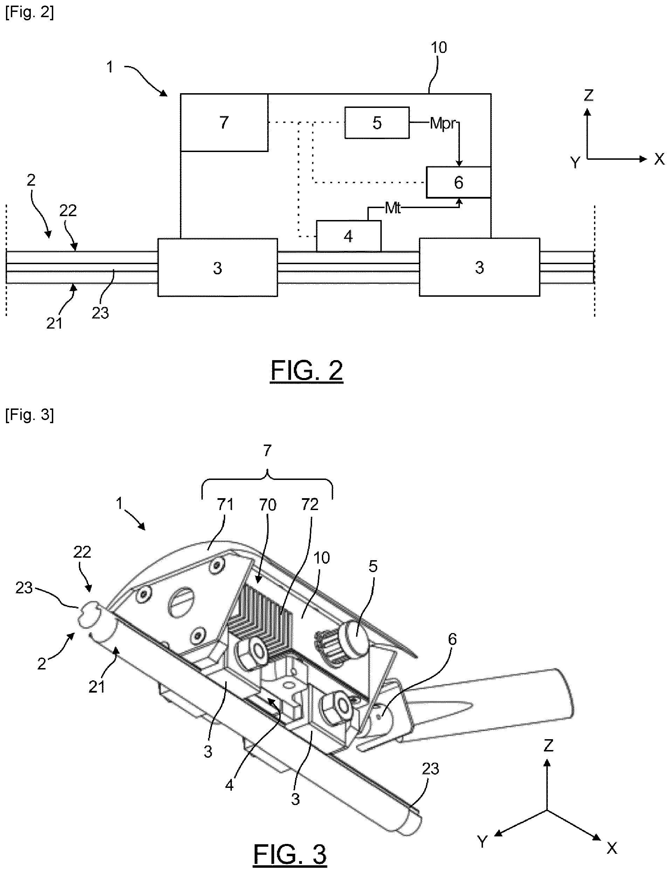

Comme illustré aux figures 2 et 3, le fil de contact 2 comprend une surface inférieure 21 tournée vers le sol S et une surface supérieure 22 opposée à la surface inférieure 21. Le fil de contact 2 comprend en outre deux rainures longitudinales 23 pour permettre le montage des pendules 202. La structure d'un fil de contact 2 est connue de l'homme du métier et ne sera pas présentée plus en détails.

Dans cet exemple, en référence à la figure 1, le fil de contact 2 comporte trois zones critiques Z1, Z2, Z3 qui doivent être surveillées. A cet effet, il est placé dans chacune des zones critiques Z1-Z3 un dispositif de surveillance 1 selon l'invention. Dans cet exemple, les dispositifs de surveillance 1 sont représentés à proximité les uns des autres. Il va de soi que le positionnement des dispositifs de surveillance 1 pourrait être varié afin d'assurer une surveillance optimale.

Un dispositif de surveillance 1 selon une forme de réalisation va être présenté aux figures 2 à 4.

Le dispositif de surveillance 1 est configuré pour être relié au fil de contact 2. Le dispositif de surveillance 1 comprend un corps principal 10, appelé également boitier, qui est configuré pour s'étendre au-dessus du fil de contact 2.

Afin de permettre un montage stable du dispositif de surveillance 1 sur le fil de contact 2, le dispositif de surveillance 1 comprend deux organes de fixation 3 configurés chacun pour serrer latéralement le fil de contact 2. Dans cet exemple, chaque organe de fixation 3 coopère avec les rainures longitudinales 23 du fil de contact 2. En particulier, chaque organe de fixation 3 se présente sous la forme d'une paire de mors pour réaliser un serrage robuste et stable. De manière avantageuse, le dispositif de surveillance 1 peut être positionné sur le fil de contact 2 sans imposer aucune modification au fil de contact 2. En outre, comme cela sera présenté par la suite, un tel montage permet d'éviter tout risque de heurts entre le dispositif de surveillance 1 et le pantographe 101.

Il a été présenté deux organes de fixation 3 solidaires du corps principal 10 et écartés longitudinalement pour améliorer la stabilité mais il va de soi qu'un seul organe de fixation 3 pourrait convenir.

En référence à la figure 2, le dispositif de surveillance 1 comprend un capteur de température 4 pour réaliser une mesure de température Mt de la surface supérieure 22 du fil de contact 2. Dans cet exemple, le capteur de température 4 est positionné entre les organes de fixation 3 afin d'être positionné très précisément et ainsi garantir une mesure de température Mt qui est optimale. Le capteur de température 4 est de préférence en contact direct avec la surface supérieure 22 du fil de contact 2 pour mesurer sa température par conduction thermique.

Dans cet exemple, le capteur de température 4 est monté dans une partie inférieure du corps principal 10 et débouche de manière préférée dans une paroi inférieure du corps principal 10. Il va de soi que le dispositif de surveillance 1 pourrait comprendre plusieurs capteurs de température 4 notamment pour assurer la redondance en cas de panne ou pour la température sur une portion longitudinale étendue du fil de contact 2. Cela est particulièrement avantageux pour mesure l'échauffement induit par le passage d'un pantographe 101 afin de déterminer le gradient de température.

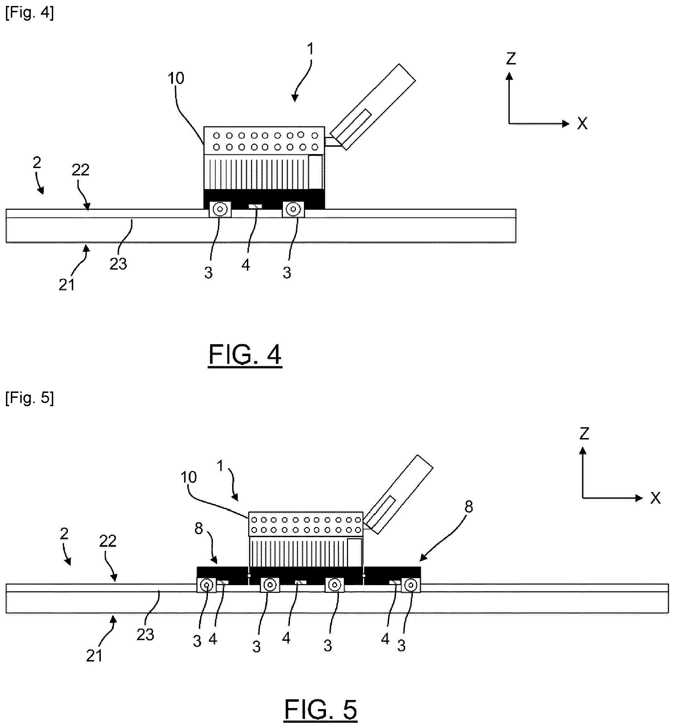

Selon une variante illustrée à la figure 5, le dispositif de surveillance 1 comprend deux bras 8, un en amont et un en aval, qui comportent chacun un capteur de température 4. Cela permet avantageusement de réaliser plusieurs mesures de températures Mt à différentes positions longitudinales voisines de manière à obtenir une mesure de température Mt plus pertinente. De préférence, les capteurs de température 4 d'un même dispositif de surveillance 1 sont écartés d'au moins 30 cm. Dans cet exemple, les bras 8 sont articulés au corps principal 10 de manière à réduire l'encombrement du dispositif de surveillance 1 lorsque celui-ci n'est pas utilisé. En outre, cela permet de réduire la rigidité par comparaison à un dispositif de surveillance ayant une structure monobloc. Plus le véhicule ferroviaire 100 circule à grande vitesse sur la voire ferrée, plus il est important d'écarter les capteurs de température 4 de manière à mesurer l'impact thermique du passage d'un pantographe 101.

En référence à la figure 2, le dispositif de surveillance 1 comprend en outre une sonde météo 5 configurée pour mesurer un point de rosée Mpr pour anticiper la formation de gel sur le fil de contact 2 par temps froid. Dans cet exemple, la sonde météo 5 est montée dans une paroi latérale du corps principal 10 comme illustré à la figure 3. La sonde météo 5 est montée derrière une membrane de protection qui est perméable à l'air mais qui bloque les poussières.

La sonde météo 5 comprend :
- Un capteur hygrométrique 5 pour réaliser une mesure d'hygrométrie au voisinage du fil de contact 2,
- un capteur de pression atmosphérique pour mesurer la pression atmosphérique au voisinage du fil de contact 2 et
- un capteur de température ambiante pour mesurer la température ambiante au voisinage du fil de contact 2.

Toujours en référence à la figure 2, le dispositif de surveillance 1 comprend en outre un organe de transmission sans fil 6 configuré pour transmettre à distance la mesure de température Mt issue du capteur de température 4 ainsi que les autres mesures optionnelles telles que la mesure hygrométrique, la mesure de pression atmosphérique et la mesure de température ambiante afin de déterminer la mesure de point de rosée Mpr.

Dans cette forme de réalisation, l'organe de transmission sans fil 6 comprend une antenne permettant de transmettre et/ou recevoir un signal sous la forme d'ondes électromagnétiques/radio pour communiquer avec au moins un émetteur et/ou un récepteur à distance. L'organe de transmission sans fil 6 peut par exemple communiquer avec un récepteur selon le protocole de transmission Lora, de l'anglais « Long Range ». Les mesures réalisées par le dispositif de surveillance 1 peuvent ainsi être transmises à un centre de surveillance qui permet d'agréger toutes les mesures Mt au cours du temps de l'ensemble des zones critiques Z1-Z3.

Toujours en référence à la figure 2, le dispositif de surveillance 1 comprend également un générateur d'énergie électrique 7 configuré pour générer de l'énergie électrique par effet Seebeck pour alimenter le capteur de température 4, la sonde météo et l'organe de transmission sans fil 6. L'effet Seebeck est le phénomène physique par lequel une différence de potentiel apparaît à la jonction de deux matériaux soumis à une différence de températures. Le générateur d'énergie électrique 7 se présente par exemple sous la forme d'un générateur thermoélectrique (GTE).

Le générateur d'énergie électrique 7 comporte une borne chaude et une borne froide et est configuré pour générer de l'énergie électrique à partir de la différences de températures entre la borne chaude et la borne froide.

De manière préférée, en référence à la figure 3, le générateur d'énergie électrique 7 comprend un module à effet Seebeck 70 relié, d'une part, à un capot absorbant 71 configuré pour être chauffé par rayonnement solaire et, d'autre part, à un dissipateur thermique 72. La présence d'un capot absorbant 71 (borne chaude) et d'un dissipateur thermique 72 (borne froide) permet d'augmenter la différence de températures vue aux bornes du module à effet Seebeck 70, ce qui augmente son rendement de génération électrique. Afin d'augmenter le rendement, le générateur d'énergie électrique 7 comporte plusieurs modules élémentaires associés en série ou en parallèle.

Pour augmenter sa température, le capot absorbant 71 présente de préférence, une couleur noire et est, de manière préférée, positionné sur une paroi supérieure du corps principal 10. Le capot absorbant 71 permet ainsi de récupérer l'énergie solaire thermique. Le dissipateur thermique 72 est à l'air libre et, de préférence, positionné dans une partie médiane du corps principal 10 pour être à distance du capteur de température 4 et ne pas le perturber. Dans cet exemple, le dissipateur thermique 72 comporte une pluralité d'ailettes de refroidissement. Le module à effet Seebeck 70 est monté dans le corps principal 10, en particulier, entre le dissipateur thermique 72 et le capot absorbant 71.

De manière alternative, pour une installation dans une zone critique dépourvue d'exposition au soleil, par exemple dans un tunnel de circulation, la borne chaude du générateur d'énergie électrique 7 est configurée pour être en contact avec la surface supérieure 22 du fil de contact 2 de manière à prélever des calories lors de son échauffement. Cela permet en outre de diminuer l'encombrement du dispositif de surveillance 1.

Selon un aspect, le dispositif de surveillance 1 peut comprendre en outre un accumulateur électrique (non représentée) configuré pour stocker l'énergie électrique générée par le module à effet Seebeck 70 de manière à alimenter le capteur de température 4, la sonde météo et l'organe de transmission sans fil 6. L'accumulateur électrique peut se présenter sous la forme d'une batterie électrique, d'une supercapacité ou autre.

Selon un aspect, le dispositif de surveillance 1 peut comprendre une mémoire de stockage (non représentée) pour enregistrer une pluralité de mesures de différentes natures. Cela permet à l'organe de transmission sans fil 6 de transmettre lors d'un même envoi plusieurs mesures horodatées. Cela permet de réduire le coût énergétique d'une transmission.

Le dispositif de surveillance 1 ayant été décrit, il va maintenant être présenté un exemple de montage et d'utilisation du dispositif de surveillance 1.

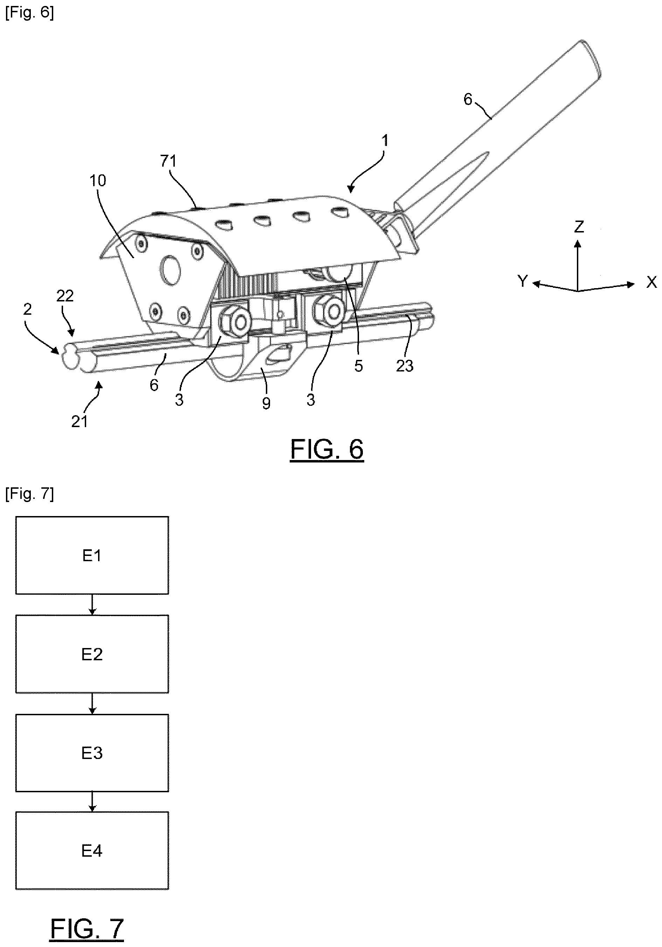

En référence à la figure 6, pour monter le dispositif de surveillance 1 sur le fil de contact 2, le corps principal 10 est positionné au-dessus du fil de contact 2 de manière à ce que le capteur de température 4 soit en contact avec la surface supérieure 22 du fil de contact 2. Pour permettre un maintien temporaire, le dispositif de surveillance 1 comprend un organe de fixation provisoire 9, de préférence en forme de bride, qui permet de se positionner sous le fil de contact 2 afin d'envelopper le fil de contact 2. Dans cet exemple, l'organe de fixation provisoire 9 est monté par translation verticale vers le haut de manière à être fixée au corps principal 10, en particulier, par boulonnage.

Ainsi, en cas de mouvement involontaire et de retournement du dispositif de surveillance 1 lors de son montage, celui-ci restera suspendu au fil de contact 2. Cette protection temporaire permet d'autoriser un jeu de déplacement longitudinal et vertical afin de permettre à un opérateur de positionner le capteur de température 4 du dispositif de surveillance 1 de manière précise. Les organes de fixation 3 sont serrés une fois la position de mesure atteinte, en particulier, en serrant les mors de serrage dans les rainures longitudinales 23. L'organe de fixation provisoire 9 peut ensuite être retiré. La surface inférieure 21 du fil de contact 2 est ainsi dépourvue d'obstacles, ce qui permet le passage d'un pantographe 101 d'un véhicule ferroviaire 100.

Le dispositif de surveillance 1 est prêt à être utilisé et ne nécessite aucun raccordement externe.

Un exemple de mise en oeuvre d'un procédé de surveillance est présenté à la figure 7. Le procédé de surveillance comprend des étapes consistant à :
- Réaliser E1 une mesure de température Mt de la surface supérieure 4 du fil de contact 2 avec le capteur de température 4 ;
- Réaliser E2 une mesure du point de rosée Mpr avec la sonde météo 5 pour déterminer la formation de givre ;
- Transmettre E3 la mesure de température Mt et la mesure du point de rosée Mpr avec l'organe de transmission sans fil 6 ;
- Générer E4 de l'énergie électrique par effet Seebeck pour alimenter le capteur de température 4, la sonde météo 5 et l'organe de transmission 6 avec le générateur d'énergie électrique 7.

En pratique, la génération d'énergie par effet Seebeck est réalisée en parallèle de la réalisation des mesures Mt, Mpr et que de la transmission desdites mesures Mt, Mpr.

De manière préférée, au cours de l'étape de transmission des mesures, il est également transmis des mesures liées à la génération/stockage d'énergie électrique afin de surveiller le bon fonctionnement du dispositif de surveillance.

De manière avantageuse, les mesures Mt, Mh de chaque dispositif de surveillance 1 peuvent être reçues de manière périodique, ce qui permet de connaître les paramètres du fil de contact 2 dans les zones critiques Z1-Z3. Tout risque potentiel peut ainsi être anticipé.

En ce qui concerne la transmission des données, celles-ci peuvent être transmises de manière individuelle ou groupée. Une transmission groupée permet de réduire la consommation électrique.

De manière préférée, les mesures sont transmises de manière périodique. De manière préférée, la période de transmission est réglable en fonction d'un dépassement de seuil de température prédéterminé, de préférence, en fonction de la durée de dépassement du seuil de température prédéterminé. Dans cet exemple, il est déterminé un seuil de température de 40°C. Tant que la mesure de température courante du fil de contact est inférieure à 40°C, la transmission est réalisée selon une période de transmission nominale, par exemple 3h.

Dès que la mesure de température courante du fil de contact est supérieure à 40°C, la période de transmission est raccourcie, par exemple à 2 minutes. La vigilance est augmentée en cas de dépassement soudain.

Si le seuil de température prédéterminé est dépassé de manière consécutive pendant une première période de temps déterminée, par exemple 6h, la période de transmission est allongée, par exemple à 30 minutes, afin de diminuer la consommation énergétique. La vigilance est baissée étant donné que cette montée en température n'est pas ponctuelle.

De même, si le seuil de température prédéterminé est dépassé de manière consécutive pendant une deuxième période de temps déterminée, par exemple 12h, la période de transmission est allongée, par exemple à 3h, afin de diminuer la consommation énergétique. De préférence, la période de transmission correspond à la période de transmission nominale. La vigilance est baissée étant donné que la mesure de température correspond à une mesure de température nominale, en particulier, sur une zone critique très utilisée.

Selon un aspect, lorsque le générateur d'énergie électrique 7 prélève des calories sur le fil de contact 2, de préférence associé avec une supercapacité, des mesures sont envoyées uniquement lors des montées en température et non de manière périodique.

Grâce à l'invention, le dispositif de surveillance 1 permet de mesurer et surveiller l'évolution de la température du fil de contact 2 de manière locale sur une portion donnée du fil de contact 2 sans risque de heurts avec un pantographe 101. En outre, le dispositif de surveillance 1 présente l'avantage de pouvoir être monté de manière permanente étant donné qu'il est autonome en énergie. Ainsi, il n'est pas nécessaire de dépêcher un opérateur sur place pour réaliser une ou des mesures comme dans l'art antérieur.

## Revendications

1. Dispositif de surveillance (1) d'un fil de contact (2) de caténaire configuré pour alimenter un véhicule ferroviaire (100), le dispositif de surveillance (1) étant configuré pour être relié au fil de contact (2) de sorte que le dispositif de surveillance (1) est positionné au-dessus du fil de contact (2), le fil de contact (2) étant longitudinal et comprenant une surface inférieure (21) tournée vers le sol (S) et une surface supérieure (22) tournée opposée à la surface inférieure (21), le dispositif de surveillance (1) comprenant :
- au moins un capteur de température (4) configuré pour réaliser une mesure de température (Mt) de la surface supérieure (22) du fil de contact (2) ;
- au moins un organe de transmission sans fil (6) configuré pour transmettre au moins une mesure de température (Mt) issue du capteur de température (4) ;
- au moins un générateur d'énergie électrique (7) configuré pour générer de l'énergie électrique par effet Seebeck pour alimenter le capteur de température (4) et l'organe de transmission (6).

2. Dispositif de surveillance (1) selon la revendication précédente, comprenant au moins un organe de fixation (3) configuré pour serrer latéralement le fil de contact (2).

3. Dispositif de surveillance (1) selon l'une des revendications 1 à 2, comprenant au moins deux capteurs de température (4) configurés pour être espacés longitudinalement, de préférence, d'au moins 30 cm.

4. Dispositif de surveillance (1) selon l'une des revendications 1 à 3, comprenant un corps principal (10) configuré pour s'étendre au-dessus du fil de contact (2), le capteur de température (4) étant monté dans une partie inférieure du corps principal (10) et débouchant dans une paroi inférieure du corps principal (10).

5. Dispositif de surveillance (1) selon l'une quelconque des revendications 1 à 4, **caractérisé en ce que** le générateur d'énergie électrique (7) comprend :
- au moins un capot absorbant (71) configuré pour être chauffé par rayonnement solaire ;
- au moins un dissipateur thermique (72) ;
- au moins un module à effet Seebeck (70) configuré pour générer de l'énergie électrique à partir de la différence de température entre le capot absorbant (71) et le dissipateur thermique (72).

6. Dispositif de surveillance (1) selon l'une quelconque des revendications 1 à 4, **caractérisé en ce que** le générateur d'énergie électrique (7) comprend :
- au moins un dissipateur thermique (72) ;
- au moins un module à effet Seebeck (70) configuré pour générer de l'énergie électrique à partir de la différence de température entre la surface supérieure (22) du fil de contact (2) et le dissipateur thermique (72).

7. Dispositif de surveillance (1) selon la revendication 5 ou 6, comprenant un corps principal (10) configuré pour s'étendre au-dessus du fil de contact (2), le dissipateur thermique (72) étant à l'air libre et positionné dans une partie médiane du corps principal (10) pour être à distance du capteur de température (4).

8. Dispositif de surveillance (1) selon l'une des revendications 1 à 7, comprenant au moins un accumulateur électrique configuré pour être alimenté en énergie électrique par le générateur d'énergie électrique (7).

9. Dispositif de surveillance (1) selon l'une des revendications 1 à 8, comprenant au moins une sonde météo (5) configurée pour réaliser une mesure de point de rosée (Mpr) au voisinage du fil de contact (2), la sonde météo (5) étant alimentée en énergie électrique par le générateur d'énergie électrique (7).

10. Ensemble comprenant un fil de contact de caténaire (2) et au moins un dispositif de surveillance (1) selon l'une des revendications 1 à 9, le dispositif de surveillance (1) étant positionné au-dessus du fil de contact (2).

11. Ensemble de surveillance selon la revendication 10, le fil de contact (2) comprenant au moins une rainure longitudinale (23), le dispositif de surveillance (1) comprend au moins un organe de fixation (3) configuré pour coopérer avec la rainure longitudinale (23).

12. Procédé de surveillance de température d'un fil de contact (2) de caténaire par un dispositif de surveillance (1) selon l'une des revendications 1 à 11, le dispositif de surveillance (1) étant positionné au-dessus du fil de contact (2), le procédé comprenant des étapes consistant à :
- Réaliser (E1) une mesure de température (Mt) d'une surface supérieure (22) du fil de contact (2) avec le capteur de température (4) ;
- Transmettre (E3) au moins une mesure de température issue du capteur de température (4) avec l'organe de transmission sans fil (6) ;
- Générer (E4) de l'énergie électrique par effet Seebeck pour alimenter le capteur de température (4) et l'organe de transmission (6) avec le générateur d'énergie électrique (7).
